# EUROPEAN PATENT SPECIFICATION

(11) **EP 1 327 973 B1**
(45) Date of publication and mention of the grant of the patent: **21.06.2006**
(21) Application number: 02360021.6
(22) Date of filing: 11.01.2002
(51) Int. Cl.: G10L 13/04

(54) **Method for generating vocal prompts and system using said method**
Verfahren und Vorrichtung zur Erzeugung von Sprachansagen
Procédé et dispositif pour la génération de d'annonces vocales

(43) Date of publication of application: 16.07.2003
(73) Proprietor: ALCATEL, 75008 Paris (FR)
(72) Inventor: Diebolt, Frank, 67400 Illkirch (FR); Villars, Sébastien, 67400 Illkirch (FR); Simon, Cédric, 67400 Illkirch (FR)
(74) Representative: Rausch, Gabriele

(56) References cited:
- EP-A- 0 484 069
- GB-A- 2 334 647

## Description

The present invention relates generally to the generation of audio or voice messages based on text data, in particular in connection with Text to Speech (TTS) means, and concerns a method for generating vocal prompts or similar audio message, and a unified voice mail system making use of said method.

It is known that using TTS engines considerably reduces the application development costs and the localising tasks. In fact, in a TTS based application, texts to speak are composed very easily, whereas in non-TTS applications, prompts have to be recorded by voice talents and the developers have to be cautious with prompt transitions. The voice talent is the TTS engine for which the customers pay a license. The localisation consists in translating the strings and buying the TTS engine for the new language.

Nowadays, TTS based applications are limited because of their very heavy resource needs, as all TTS engines or processes are very time consuming tasks, therefore reducing available CPU resources of the PC or server which might be needed for other real time tasks.

The impact of the aforementioned drawback is even substantially increased when a multilingual TTS engine is implemented and/or when a great number of users have to be served simultaneously.

A proposed solution in order to try to overcome the aforementioned problem consists in using several TTS engines distributed on several servers. Those servers are often grouped as a cluster, and a load balancing mechanism is implemented to distribute TTS rendering requests among all the servers.

Nevertheless, this known solution implies that customers buy several servers, and if their use of TTS increases, they will have to add more servers in the cluster.

Furthermore, in the particular case of a unified voice mail system, most of the prompts are static and known at design time (in previous versions of unified messaging systems or voice mail systems, prompts were recorded by "voice talent"). The only dynamic prompts in voice mail systems are generally limited to users' emails. It can therefore be considered that it is too costly to use several TTS servers to generate and play static prompts.

Thus, the problem to be solved by the invention is to reduce the need in resources and in dedicated servers in the foregoing context, and especially to allow more users to run TTS based applications on a single machine or on a limited number of servers, without slowing down the other performed tasks by a substantial amount.

GB-A-2 334 647 discloses a method for generating vocal prompts or similar audio messages using a TTS engine in a multitasking environment, according to the preamble of claim 1, i.e. wherein some vocal messages or prompts are imported and/or generated by said TTS process or engine and stored in a cache in an available state, to be rendered or reproduced upon adequate request without using said TTS process or engine.

According to the teaching of this document stored vocal messages are labelled using key-words.

Therefore a systematic and automated parsing of new prompts and thus their global and substantive comparison with prompts previously prestored in audio form cannot be applied.

It is also an aim of the present invention to overcome these drawbacks.

Therefore, the present invention concerns a method of the type as described before, characterised in that it comprises, each time some requested prompt text has to be rendered, the operating steps of calculating the signature(s) of said text as an indicator of its content, comparing said signature(s) with the signatures of the vocal prompts stored in the cache and retrieving and rendering the audio content(s) of the concerned stored prompt(s) if the compared signatures match, without making use of the TTS process or engine.

The present invention also concerns a unified voice mail system according to claim 6, which can in particular make use of the aforementioned method of the invention.

According to a feature of the invention each stored prompt is identified by an indicator of its textual content, said indicator being advantageously a signature, preferably a MD5 type signature, calculated using the prompt text.

In case of a long or complex prompt text, the operating steps are performed for each (previously recognised) segment or part of said text

According to a most preferred additional feature of the invention, the method further consists in performing the audio rendering, by said TTS process or engine, of each prompt text or text segment which is not stored in the cache, transmitting it to the audio reproducing or playing means and storing a copy of said audio rendering orequivalent in the cache with an adequate labelling. Thus, the cache will be filled progressively with supplementary contents of various prompts or prompt paris and consequently the TTS engine will therefore be less and less used as time passes.

in order to have the method operative as quickly as possible with a good efficiency, one can think of importing and or generating at least some static vocal prompts at once at an earlier stage, such as an installation or initialisation phase, and storing the audio contents of said prompts in a cache by labelling them in relation with their textuel content.

As can be noticed from the foregoing, the basic idea of the invention is to import or to let the TTS engine generate static prompts once and to implement a cache mechanism in which prompts are identified by their textual content, using a MD5 signature based on the prompt text. Before asking the TTS engine to render a text, the MD5 signature of this text is calculated. Then this signature is looked up in the cache in order to find the previously rendered vocal version of the corresponding text if available. If said vocal version is not stored in the cache, it will be produced by the TTS engine and a copy of it stored in the cache with its signature.

The present invention also concerns a unified voice mail system using or able to implement the method described before and comprising a text to speech (TTS) engine.

Said system also comprises a cache memory for storing the audio contents of prompts or parts of prompts, computing means for calculating an indicator for each prompt or prompt part to be stored and comparator means for comparing two indicators.

Preferably, the indicator is a MD5 type signature of the text of the concerned prompt or prompt part and the method can also comprise segment recognition and/or segmentation means, treating the texts of the prompts to be rendered before calculation of their corresponding indicator(s).

Said system will in practice also comprise a voice browser receiving prompts or part of prompts in audio form from the TTS engine and/or the cache memory and transmitting them to audio playing means, possibly after putting them in the correct order.

This invention will be better understood thanks to the following description explaining a preferred embodiment of the invention as a non limitative example.

To show a practical implementation of the invention, one can consider a voice browser which is an application that reads VoiceXML files and generate an output over a phone set.

Such a unified voice mail system in VoiceXML is for example described in W3C Note 05 of May, 2000 (URL address: http//www.w3.org/TR/Voicexml).

VoiceXML is an XML based conversation description language consisting in an XML tag hierarchy (VoiceXML is specified by the W3C organisation) such as "<form>, <block>, <menu>, <prompt>", etc. The <prompt> tag is used to define a text to be rendered by TTS and played on a phone set.

When the voice browser parses a VoiceXML file, each text segment of a prompt section is looked up in the cache by using its MD5 signature.

If the text has already been vocaly rendered by the TTS engine, the voice browser will retrieve directly the audio content from the cache and play it (without any work for the TTS engine).

If the vocal version of this text is not stored in the cache, then the TTS engine performs the vocal rendering of this text, transmits it to the voice browser and puts a copy in the cache for future playings.

The cache may be pre-filled during the installation of the product with most of the static prompts needed by the unified messaging system.

Each customer has a specific use of their Unified messaging system. It means that some static prompts may be missing in the cache. Those prompts will be generated progressively when they are needed and put in the cache. So, the cache will be filled progressively. The mechanism according to the invention will "learn" the specificities of each customer at run time.

If another application that needs the TTS is plugged, its dedicated static prompts may be provided or the cache may be filled automatically (knowing in this case that the first use of the TTS related application will be slower).

The present invention is, of course, not limited to the preferred embodiments described herein, changes can be made or equivalents used without departing from the scope of the invention defined by the appended claims.

## Claims

1. Method for generating vocal prompts or similar audio messages in relation with a text to speech (TTS) process or engine suitable for a multitasking environment, wherein some vocal messages or prompts are imported and/or generated by said TTS process or engine and stored in a cache in an available state, to be rendered or reproduced upon adequate request without using said TTS process or engine, method **characterised in that** it comprises, each time some requested prompt text has to be rendered, the operating steps of calculating the signature(s) of said text as an indicator of its content, comparing said signature(s) with the signatures of the vocal prompts stored in the cache and retrieving and rendering the audio content(s) of the concerned stored prompt(s), if the compared signatures match, without making use of the TTS process or engine.

2. Method according to claim 1, **characterised in that** the signature is a MD5 type signature, calculated using the prompt text.

3. Method according to claim 1 or 2, **characterised in that** it consists in importing and/or generating at least some static vocal prompts at once at an earlier stage, such as an installation or initialisation phase, and storing the audio contents of said prompts in a cache by labelling them in relation with their textual content.

4. Method according to claim 1, **characterised in that**, in case of a long or complex prompt text, the operating steps are performed for each segment or part of said text.

5. Method according to anyone of claims 1 or 4, **characterised in that** it further consists in performing the audio rendering, by said TTS process or engine, of each prompt text or text segment which is not stored in the cache, transmitting it to the audio reproducing or playing means and storing a copy of said audio rendering in the cache with an adequate labelling.

6. Unified voice mail system using a method for generating vocal prompts or similar audio messages suitable for a multitasking environment, said system comprising a text to speech (TTS) engine and a cache memory for storing in an available state the audio contents of prompts or parts of prompts which are imported and/or generated by said TTS engine, system **characterised in that** it also comprises computing means for calculating a signature for each prompt or prompt part to be stored, in the form of an indicator of its textual content, comparator means for comparing two signatures and means for rendering the audio content(s) of the concerned stored prompt(s) if the compared signatures match, without making use of the TTS process or engine.

7. System according to claim 6, **characterised in that** each indicator is a MD5 type signature of the text of the concerned prompt or prompt part.

8. System according to anyone of claims 6 and 7, **characterised in that** it also comprises segment recognition and/or segmentation means, treating the texts of the prompts to be rendered before calculation of their corresponding indicator(s).

9. System according to anyone of claims 6 to 8, **characterised in that** it also comprises a voice browser receiving prompts or part of prompts in audio form from the TTS engine and/or the cache memory and transmitting them to audio playing means, possibly after putting them in the correct order.

## Patentansprüche

1. Verfahren zum Erzeugen von Sprachansagen oder ähnlichen Audionachrichten in Beziehung mit einem Text-zu-Sprache-Prozeß (TTS-Prozeß) oder -Engine, die für eine Multitasking-Umgebung geeignet ist, in welchem einige Sprachmeldungen oder Ansagen importiert und/oder durch den TTS-Prozeß oder -Engine erzeugt und in einem Cache in einem verwendbaren Zustand gespeichert werden, um auf entsprechende Abfrage ohne Verwendung des TTS-Prozesses oder -Engine aufbereitet oder wiedergegeben zu werden, wobei das Verfahren **dadurch gekennzeichnet ist, daß** es jedesmal, wenn ein abgerufener Ansagetext aufzubereiten ist, die Arbeitsschritte umfaßt: Berechnen der Signatur(en) des Textes als ein Indikator seines Inhalts, Vergleichen der Signatur(en) mit den Signaturen der Sprachansagen, die in dem Cache gespeichert wurden, und Abrufen und Aufbereiten des Audioinhalts bzw. der Audioinhalte der betroffenen gespeicherten Ansage(n), wenn die verglichenen Signaturen übereinstimmen, ohne den TTS-Prozeß oder -Engine zu verwenden.

2. Verfahren nach Anspruch 1, **dadurch gekennzeichnet, daß** die Signatur eine MDS-Signatur ist, die unter Verwendung des Ansagetextes berechnet wurde.

3. Verfahren nach Anspruch 1 oder 2, **dadurch gekennzeichnet, daß** es im Importieren und/oder Erzeugen mindestens einiger statischer Sprachansagen auf einmal zu einem früheren Stadium, wie zum Beispiel einer Installations- oder Initialisierungsphase, und Speichern der Audioinhalte der Ansagen in einem Cache durch ihr Kennzeichnen in Beziehung mit ihrem Textinhalt besteht.

4. Verfahren nach Anspruch 1, **dadurch gekennzeichnet, daß** im Fall eines langen oder komplexen Ansagetextes die Arbeitsschritte für jedes Segment oder Teil des Textes durchgeführt werden.

5. Verfahren nach einem der Ansprüche 1 oder 4, **dadurch gekennzeichnet, daß** es außerdem in dem Durchführen des Audioaufbereitens durch den TTS-Prozeß oder -Engine jedes Ansagetextes oder Textsegmentes, der nicht in dem Cache gespeichert wird, seinem Übertragen an die Audiowiedergabe- oder Wiedergabeeinrichtungen und dem Speichern einer Kopie des Audioaufbereitens in dem Cache mit einer entsprechenden Kennzeichnung besteht.

6. Einheitliches Sprachinformationssystem, das ein Verfahren zum Erzeugen von Sprachansagen oder ähnlichen Audionachrichten verwendet, die für eine Multitasking-Umgebung geeignet sind, wobei das System eine Text-zu-Sprache-Engine (TTS-Engine) und einen Cachespeicher zum Speichern der Audioinhalte der Ansagen oder Teile der Ansagen in einem anwendbaren Zustand umfaßt, die durch die TTS-Engine importiert und/oder erzeugt werden, wobei das System **dadurch gekennzeichnet, daß** es ebenfalls umfaßt: Rechenvorrichtungen zum Berechnen einer Signatur für jede Ansage oder Ansageteil, der in Form eines Indikators seines Textinhalts zu speichern ist, Komparatoreinrichtungen zum Vergleichen von zwei Signaturen und Einrichtungen zum Aufbereiten des Audioinhalts bzw. der Audioinhalte der betroffenen gespeicherten Ansage(n), wenn die verglichenen Signaturen übereinstimmen, ohne den TTS-Prozeß oder -Engine zu verwenden.

7. System nach Anspruch 6, **dadurch gekennzeichnet, daß** jeder Indikator eine MD5-Signatur des Textes der betroffenen Ansage oder Ansageteils ist.

8. System nach einem der Ansprüche 6 und 7, **dadurch gekennzeichnet, daß** es ebenfalls Segmenterkennungs-und/oder Segmentierungseinrichtungen umfaßt, die die Texte der aufzubereitenden Ansagen vor der Berechnung ihres Indikators bzw. ihrer entsprechenden Indikatoren behandeln.

9. System nach einem der Ansprüche 6 bis 8, **dadurch gekennzeichnet, daß** es ebenfalls einen Sprachbrowser umfaßt, der Ansagen oder einen Teil der Ansagen in Audioform von der TTS-Engine und/oder dem Cachespeicher empfängt und sie an Audiowiedergabeeinrichtungen übermittelt, möglicherweise nachdem sie in die richtige Reihenfolge gebracht werden.

## Revendications

1. Procédé de génération d'invites vocales ou de messages audio similaires en relation avec un procédé ou un moteur de synthèse vocale à partir de texte (TTS) approprié à un environnement multitâche, dans lequel certains messages vocaux ou invites sont importés et/ou générés par ledit procédé ou moteur de synthèse TTS et mémorisés dans une mémoire cache pour qu'ils soient disponibles, afin d'être rendus ou reproduits lors d'une demande adéquate sans utiliser ledit procédé ou moteur de synthèse TTS, le procédé étant **caractérisé en ce qu'**il comprend, à chaque fois qu'un certain texte d'invite requis doit être rendu, les étapes fonctionnelles de calcul de la ou des signatures dudit texte en tant qu'indicateur de son contenu, la comparaison de la ou desdites signatures aux signatures des invites vocales mémorisées dans la mémoire cache, ainsi que la récupération et le rendu du ou des contenus audio de la ou des invites concernées mémorisées si les signatures comparées correspondent, sans utiliser le procédé ou un le moteur de synthèse TTS.

2. Procédé selon la revendication 1, **caractérisé en ce que** la signature est une signature de type MD5, calculée en utilisant le texte de l'invite.

3. Procédé selon la revendication 1 ou 2, **caractérisé en ce qu'**il consiste en l'importation et/ou en la génération d'au moins certaines invites vocales statiques à la fois, au niveau d'une étape précédente, telle qu'une phase d'installation ou d'initialisation, ainsi qu'en mémorisant les contenus audio desdites invites dans une mémoire cache en les étiquetant par rapport à leur contenu textuel.

4. Procédé selon la revendication 1, **caractérisé en ce que**, dans le cas d'un texte d'invite long ou complexe, les étapes fonctionnelles sont effectuées pour chaque segment ou partie dudit texte.

5. Procédé selon l'une quelconque des revendications 1 ou 4, **caractérisé en ce qu'**il consiste en outre à effectuer le rendu audio, par ledit procédé ou moteur de synthèse TTS, de chaque texte ou segment de texte d'invite qui n'est pas mémorisé dans la mémoire cache, à le transmettre dans le moyen de reproduction ou de restitution audio et à mémoriser une copie dudit rendu audio dans la mémoire cache, accompagnée d'un étiquetage adéquat.

6. Système de messagerie vocale unifié utilisant un procédé de génération d'invites vocales ou de messages audio similaires approprié à un environnement multitâche, ledit système comprenant un moteur de synthèse vocale à partir de texte (TTS) et une mémoire cache destinée à mémoriser, pour qu'ils soient disponibles, les contenus audio d'invites ou de parties d'invites qui sont importés et/ou générés par ledit moteur de synthèse TTS, le système étant **caractérisé en ce qu'**il comprend également un moyen informatique destiné à calculer une signature pour chaque invite ou partie d'invite devant être mémorisée, sous la forme d'un indicateur de son contenu textuel, un moyen de comparateur destiné à comparer deux signatures et un moyen destiné à rendre le ou les contenus audio de la ou des invites concernées mémorisées si les signatures comparées correspondent, sans utiliser le procédé ou le moteur de synthèse TTS.

7. Système selon la revendication 6, **caractérisé en ce que** chaque indicateur est une signature de type MD5 du texte de l'invite ou de la partie d'invite concernée.

8. Système selon l'une quelconque des revendications 6 et 7, **caractérisé en ce qu'**il comprend également un moyen de reconnaissance de segment et/ou de segmentation, en traitant les textes des invites à rendre avant le calcul de leur(s) indicateur(s) correspondant(s).

9. Système selon l'une quelconque des revendications 6 à 8, **caractérisé en ce qu'**il comprend également un navigateur vocal recevant des invites ou des parties d'invites sous forme audio en provenance du moteur de synthèse TTS et/ou de la mémoire cache et les transmettant au moyen de restitution audio, éventuellement après les avoir placés dans un ordre correct.
